Europäisches Patentamt

European Patent Office

Office européen des brevets

(11) Publication number: **0 604 663 A1**

## EUROPEAN PATENT APPLICATION
## published in accordance with Art. 158(3) EPC

(21) Application number: **93914994.4**

(22) Date of filing: **13.07.93**

(86) International application number:
**PCT/JP93/00966**

(87) International publication number:
**WO 94/02988 (03.02.94 94/04)**

(51) Int. Cl.5: **H02P 5/00**

(30) Priority: **17.07.92 JP 212266/92**
**26.10.92 JP 309776/92**

(43) Date of publication of application:
**06.07.94 Bulletin 94/27**

(84) Designated Contracting States:
**DE IT**

(71) Applicant: **FANUC LTD.**
**3580, Shibokusa Aza-Komanba, Oshino-mura**
**Minamitsuru-gun, Yamanashi 401-05(JP)**

(72) Inventor: **IWASHITA, Y., Room 9-307, Fanuc**
**Mansyon Harimami**
**3533-2, Shibokusa,**
**Oshino-mura**
**Minamitsuru-gun, Yamanashi 401-05(JP)**

(74) Representative: **Billington, Lawrence Emlyn et**
**al**
**HASELTINE LAKE & CO**
**Hazlitt House**
**28 Southampton Buildings**
**Chancery Lane**
**London WC2A 1AT (GB)**

(54) METHOD FOR ESTIMATING INERTIA AND DISTURBANCE TOROUE, AND METHOD FOR DETECTING ABNORMAL LOAD.

(57) The ratio between a torque constant and an inertia is estimated. On the value of this estimation, the disturbance torque and abnormal load are detected together. The amount of change u' in a torque command u between one sampling-period before and two sampling- periods before is obtained (S1). An estimated speed y* of a motor is obtained on the basis of this amount of change u' in the torque command, the motor speeds one period before and two period before, y(i-1), y(i-2), and the estimated ratio b*(i-1) between the torque constant and inertia obtained in the preceding period, b*(i-1) (S2). Letting the error between the actual speed of the motor y(i) and the estimated motor speed y* be e(i), and the parameter be $\beta$, the estimated ratio b*(i) in the period concerned is obtained by the following equation; thus determining the converged value of this estimated ratio b*-(i) as the ratio between the torque constant and inertia: b*(i) = b*(i-1) + $\beta$.u'.e(i)/(1 + $\beta$.u'$^2$). By use of this estimated ratio b', an observer is set up to estimate the disturbance torque and to detect abnormal load.

EP 0 604 663 A1

FIG. 4

```
                    ┌─────────────┐
                    │    START    │
                    └──────┬──────┘
                           │
     ┌─────────────────────┴─────────────────────┐
S1   │       u´ = u (i − 1) − u (i − 2)           │
     └─────────────────────┬─────────────────────┘
                           │
     ┌─────────────────────┴─────────────────────┐
     │       y* = 2 · y (i − 1) − y (i − 2)       │
S2   │            ÷ b* (i − 1) · u´               │
     └─────────────────────┬─────────────────────┘
                           │
     ┌─────────────────────┴─────────────────────┐
S3   │ INPUT SPEED COMMAND AND ACTUAL SPEED y(i)  │
     └─────────────────────┬─────────────────────┘
                           │
     ┌─────────────────────┴─────────────────────┐
     │      EXECUTE SPEED LOOP PROCESSING TO      │
S4   │  OBTAIN AND OUTPUT TORQUE COMMAND u(i)     │
     └─────────────────────┬─────────────────────┘
                           │
     ┌─────────────────────┴─────────────────────┐
     │    CALCULATION OF ESTIMATED SPEED ERROR    │
S5   │           e (i) = y (i) − y*               │
     └─────────────────────┬─────────────────────┘
                           │
     ┌─────────────────────┴─────────────────────┐
     │   CALCULATE AND OUTPUT ESTIMATED RATIO     │
S6   │   b* (i) = b* (i − 1)                      │
     │        ÷ β · u´ · e (i) ╱ (1 ÷ β · u´²)    │
     └─────────────────────┬─────────────────────┘
                           │
                    ┌──────┴──────┐
                    │   E N D     │
                    └─────────────┘
```

## TECHNICAL FIELD

This invention relates to a method of estimating inertia of a motor-driven machine, such as a machine tool or a robot, and disturbance torque using the estimated inertia, and also detecting abnormal load acting on the motor.

## BACKGROUND ART

In a drive and control system of the servomotors for driving feed shafts or a spindle in a machine tool, or arms of a robot, in order to determine the speed loop gain for the feedback control of motor speed, it is necessary to know the torque constant of each motor and the magnitude of the inertia of the motor and the associated machine. For example, in the case of proportional-plus-integral control of the speed loop, a proportional gain and an integral gain are respectively obtained as a function of the ratio of (torque constant/inertia) of a motor. Thus, it is at least necessary to know previously the torque constant and the magnitude of the inertia. Conventionally, these torque constant and inertia including the machine connected with the motor have been roughly known without determining accurate values.

Also, it is known in the art to use an observer for estimating the disturbance torque and detecting abnormal load such as caused by the malfunction of feed mechanism of the machine or the collision of the machines, based on the estimated disturbance. In order to accurately compensate the effects of the disturbance or improve the response of the machine driven by motor, it is necessary to know accurate ratio between the inertia of a motor or the inertia of the motor and the associated machine system, and the torque constant.

In estimating the disturbance torque by an observer, the ratio between the inertia and the torque constant is used as a coefficient for converting the torque command into the acceleration of the motor. Therefore, the disturbance torque can not be estimated accurately at the time of acceleration and deceleration unless the ratio between the inertia and torque constant is an accurate value. Moreover, in detecting the abnormal load based on the estimated disturbance torque, if the estimated disturbance torque is not detected accurately, the threshold value for detecting the abnormal load will increase and results the fall of abnormal load detecting accuracy.

## DISCLOSURE OF INVENTION

An object of the present invention is to estimate the ratio between inertia and torque constant by means of the motor drive control system without using any special measuring means. Moreover, another object of the present invention is to estimate an accurate disturbance torque using the estimated ratio between the inertia and torque constant. Still another object of the present invention is to detect abnormal load acting on a motor with high accuracy using the estimated disturbance torque.

The method of the present invention comprises the steps of: (a) obtaining an estimated motor speed y* based on a variation u' between a torque command u(i-1) of one processing period before and a torque command u(i-2) of two processing periods before, an actual motor speed y(i-1) of one processing period before, an actual motor speed y(i-2) of two processing periods before, and an estimated ratio b*(i-1) between torque constant and inertia of the motor obtained one processing period before; (b) obtaining an estimated speed error e which is a difference between an actual motor speed y(i) of the present processing period and said estimated motor speed y*; (c) correcting and updating said estimated ratio b*(i) based on said estimated speed error e in such a manner that a variation of the estimated ratio b*(i) is small when the variation u' of said torque command is small, is substantially proportional to said variation u' of said torque command until said variation u' exceeds a predetermined value, and is saturated to become a certain value when said variation u' of said torque command exceeds the predetermined value; and (d) determining said ratio between said constant value and inertia to be a value to which said estimated ratio b*(i) converges.

In the above step of correcting and updating the estimated ratio b*(i), the inertia may be estimated by correcting and updating the estimated ratio b*(i) according to the following equation, using a predetermined parameter $\beta$.

$$b^*(i) = b^*(i-1) + \beta \cdot u' \cdot e/(1 + \beta u'^2)$$

When the above processing is executed in each of the processing periods, the above estimated ratio b* is converged to a certain value, which is determined as a ratio of torque constant to inertia of a motor.

The ratio of torque constant to inertia thus obtained is used as a coefficient for converting a torque command to an estimated acceleration of the motor in an observer, thereby estimate the disturbance torque.

Furthermore, when the value of the estimated disturbance torque exceeds the predetermined value, it is judged to have been caused by an abnormal load, and the speed command is reduced to 0 to stop the motor.

## BRIEF DESCRIPTION OF DRAWINGS

Fig. 1 is a block diagram of a control system from a torque command u of the motor to a speed y as an output of the motor;

Fig. 2 is a block diagram of an observer for detecting abnormal load;

Fig. 3 is a block diagram of a servomotor control system for a machine tool or the like, for carrying out the present invention;

Fig. 4 is a flowchart of a process for estimating the ratio of torque constant to inertia according to the method of the present invention;

Fig. 5 is a graph showing transition of the estimated ratio between torque constant and inertia where the acceleration and deceleration are repeated at intervals of 100 msec;

Fig. 6 is a flowchart showing an abnormal load detecting process according to the method of the present invention;

Fig. 7 is a graphic representation of an experiment conducted for experimentally determining torque command, estimated disturbance torque, and actual speed through an experimental collision without applying abnormal load detecting process of the present invention;

Fig. 8 is a graphic representation of an experiment conducted measured for experimentally determining torque command, estimated disturbance torque, and actual speed through an experimental collision, applying the abnormal load detecting method of the present invention.

## BEST MODE FOR CARRYING OUT THE INVENTION

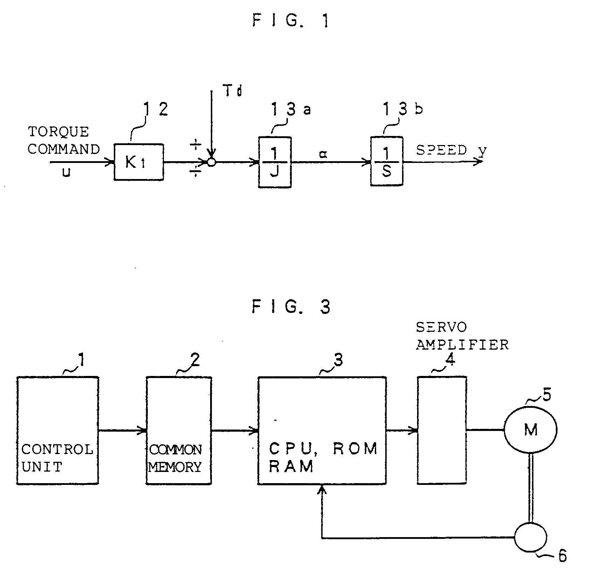

In a block diagram of a motor control system as shown in Fig. 1, when the torque command u is inputted to a motor, the torque command u is multiplied by a torque constant Kt, and a disturbance torque Td is added to the multiplied value. Thus obtained value is divided by an inertia J, and a motor speed y is obtained by integrating the result of the division. When a torque command, an actual motor speed and a disturbance are respectively given as u(i), y(i) and Td(i) at an i period in the predetermined processing periods Ts, an actual motor speed y(i) is expressed by the following equation (1) under the condition that the disturbance torque Td and the torque command u do not change during the processing period Ts.

$$y(i) = y(i-1) + (Ts/J) \cdot \{Kt \cdot u(i-1) + Td(i-1)\} \qquad (1)$$

Similarly, the following equation (2) holds with respect to the immediately preceding processing period.

$$y(i-1) = y(i-2) + (Ts/J) \cdot \{Kt \cdot u(i-2) + Td(i-2)\} \qquad (2)$$

Subtracting the equation (2) from the equation (1), the following equation (3) is obtained.

$$y(i)-y(i-1) = y(i-1)-y(i-2) + (Ts/J) \cdot [Kt\{u(i-1)-u(i-2)\} + Td(i-1)-Td(i-2)] \qquad (3)$$

Assuming Td(i-1) = Td(i-2), as the disturbance torque will not substantially change, the following equation (4) is derived from the above equation (3).

$$y(i) = 2 \cdot y(i-1)-y(i-2) + (Ts \cdot Kt/J) \cdot u'(i-1) \qquad (4)$$

where, u'(i-1) = u(i-1)-u(i-2).
Assuming (Ts \cdot Kt/J) = b*(i-1), the equation (4) is transformed into the following equation (5):

$$y^*(i) = 2 \cdot y(i-1)-y(i-2) + b^*(i-1) \cdot u'(i-1) \qquad (5)$$

In the above equation (5), b*(i-1) = (Ts \cdot Kt/J) represents the ratio of (torque constant/inertia) and y*(i) represents an estimated motor speed which is estimated on the basis of b*(i-1).

A difference between the actual motor speed y(i) and the estimated motor speed y*(i) in the processing period i is expressed as an estimated error e(i), which is defined as e(i) = y(i)-y*(i). Using this estimated error e(i), the above ratio b*(i) of (torque constant/inertia) in the present processing period is estimated. Hereinafter, ratio b*(i) and is referred to simply as an estimated ratio.

In this case, the ratio b*(i) is estimated by an algorithm such that, the variation b*(i)-b*(i-1) of the above estimated ratio is suppressed to be a small value approximating to 0 when the variation u'(i) of torque command u is small, the variation of the estimated ratio increases as the variation u'(i) of the torque command u increases, and the variation of the estimated ratio is saturated when the variation u'(i) of the torque command u has exceeded a certain predetermined value. In this embodiment, the following equation (6) is used for the estimation.

$$b^*(i) = b^*(i-1) + \beta \cdot u'(i) \cdot e(i)/(1 + \beta u'(i)^2) \qquad (6)$$

where, $\beta$ represents a parameter determining a converging speed. By executing the processing according to the above equation (6) in each processing period, the above estimated ratio b*(i) is converged to a constant value. Using this converged constant value of the estimated ratio b* as a coefficient for converting a command torque into an estimated motor acceleration in an observer for estimating a disturbance torque, accurate estimated value of the disturbance torquecan be obtained. Based on the estimated disturbance torque, malfunction of a motor-driven feed mechanism or the other mechanisms and abnormal load resulting from a collision between a machine and other objects can be detected accurately.

According to the block diagram of Fig. 1 showing a model of the control system of a motor from torque command u to speed y as the output of the motor, the state equation is expressed by the following equation (7) where the actual speed of the motor y and the disturbance torque Td are as state variables;

$$\begin{bmatrix} a \\ \dot{Td} \end{bmatrix} = \begin{bmatrix} 0 & 1/J \\ 0 & 0 \end{bmatrix} \begin{bmatrix} y \\ Td \end{bmatrix} + \begin{bmatrix} Kt/J \\ 0 \end{bmatrix} u \qquad ---- \quad (7)$$

In the above equation (7), $\alpha$ represents acceleration and $\dot{Td}$, Td with one dot, represents a changing rate of the disturbance. $\dot{Td}$ is assumed to be nearly equal to 0 since the disturbance Td will not change within a short period.

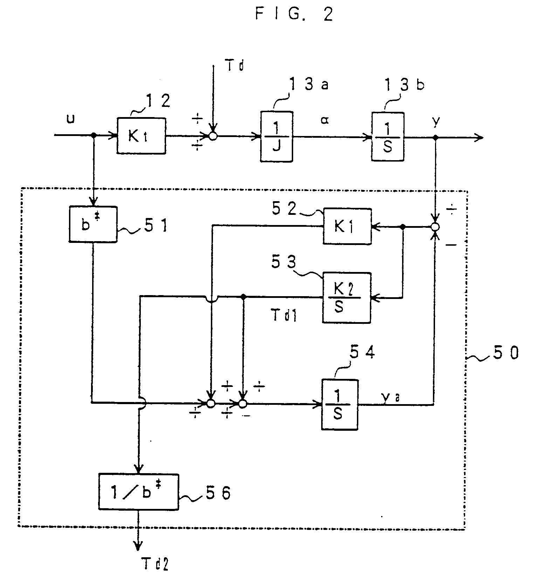

An observer of the same dimension is arranged for estimating the speed y and the disturbance Td as the state variables, using the ordinary method for arranging the observer in accordance with equation (7). Such observer is indicated by a reference numeral 50 in Fig. 2. The disturbance estimating observer 50 has terms 52 and 53 whose K1 and K2 are parameters of the disturbance estimating observer. A term 51 is a coefficient for converting a current value u, which is a torque command actually outputted to a servomotor, into an estimated motor acceleration. The above-described estimated ratio b* is adopted as the term 51. A reference numeral 54 represents an integration term.

The block diagram of Fig. 2 is analyzed assuming that b* = Kt/J, so that the following two equations are derived.

$$\{u \cdot Kt + Td\} \, (1/J \cdot S) = y \qquad (8)$$

$$\{u \cdot (Kt/J) + (y-ya)K1 + (y-ya)(K2/S)\}(1/S) = ya \qquad (9)$$

(where ya is an estimated speed, corresponding to an output of the integration term 54.)

From the above equation (8), the following equation is derived.

$$u = (y \cdot J \cdot S - Td) / Kt \qquad (10)$$

Putting the equation (10) into the equation (9), the following equations are obtained.

$$(y \cdot J \cdot S - Td)/J + (y-ya)K1 + (y-ya)(K2/S) = ya \cdot S \qquad (11)$$

S(y-ya) + (y-ya)•K1 + (y-ya)(K2/S) = Td/J     (12)

From the above equation (12), the following equation is derived.

$$(y-ya) \ = \ \frac{Td}{J} \ \cdot \ \frac{1}{S+K1+(K2/S)} \qquad ----- \ (13)$$

From the above equation (13), an integration value Td1 as an output of the term 53, is expressed by the following equation (14).

$$Td1 \ = \ (y-ya)\cdot(K1/S)$$

$$= \ \frac{Td}{J} \ \cdot \ \frac{K2}{S^2+K1\cdot S+K2} \qquad ----- \ (14)$$

By selecting the parameters K1 and K2 of the above equation (14) to stabilize the poles, an approximation of Td1 = Td/J will be allowed. The calculated integration value Td1 is multiplied by 1/b* (=J/Kt) which is a reciprocal of the estimated ratio b*, so that an estimated value Td2 of the disturbance torque Td (proportional to the disturbance torque Td) is obtained.

As described above, in obtaining the estimated disturbance torque Td2 by an observer, the torque command is multiplied by the estimated ratio b* between the torque constant Kt and the inertia J, in the term 51 for obtaining the estimated motor acceleration. Furthermore, the reciprocal of the estimated ratio b* of the torque constant Kt to the inertia J is multiplied in the term 56 in order to obtain the estimated value Td2 of the disturbance torque. Accordingly, in order to reduce the error between the estimated value Td2 of the disturbance torque and the actual disturbance torque Td, the closer the coefficients of the aforesaid terms 51 and 56 are to the estimated ratio (Kt/J) between the actual torque constant Kt and the inertia J and its reciprocal (J/Kt), respectively, the higher the accuracy of estimated value of disturbance torque is. In this embodiment, the estimated ratio b* between the converged torque constant Kt and the inertia J, and its reciprocal and used as the coefficients of the terms 51 and 56. Thus, the accurate estimated value Td2 for the disturbance torque is obtained.

This further means that, since the disturbance torque is estimated accurately in case of detecting abnormal load based on the magnitude of estimated disturbance torque, the threshold value for detecting abnormal load may be of a small value, so that the abnormal load can be detected with high accuracy.

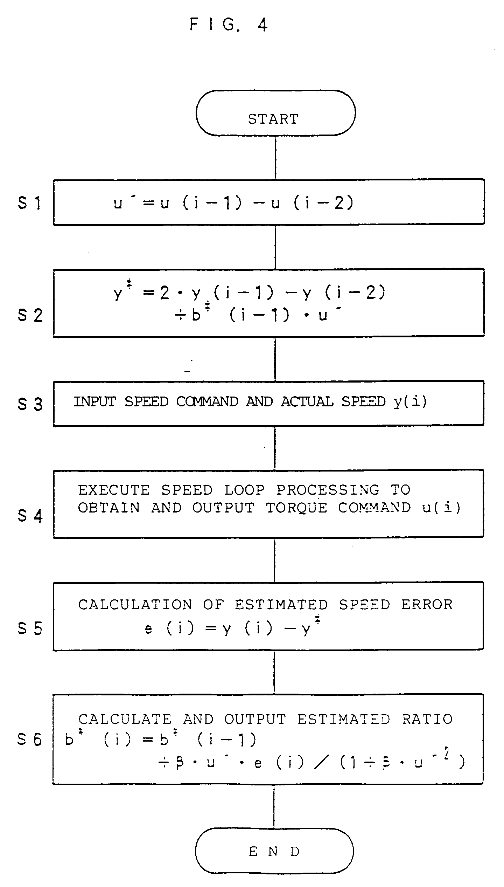

Fig. 3 is a block diagram showing a control system for a servomotor which drives a machine tool in accordance with one embodiment of the present invention. A reference numeral 1 denotes a computerized numerical control apparatus (CNC) which serves as a controller for controlling a machine tool. A common memory 2 intermediates the transmission of information between the CNC 1 and a processor in a digital servo circuit 3, so that various data such as a positional command written by the CNC 1, and are transmitted to the digital servo circuit 3, and the alarm information, the aforementioned estimated ratio b* and others written by the processor in the digital servo circuit 3 are transmitted to the CNC 1. The digital servo circuit 3 is a digital signal processor including a processor, a ROM, a RAM and others. The digital servo circuit 3 carries out; the position loop control using proportional (P) control and the speed loop control using proportional-integral (PI) control in controlling servomotors associated with various shafts of the machine tool. A servo amplifier 4 are constituted by transistor inverters and others, and drives a servomotor 5. A position and speed detector 6 detects position and speed of the servomotor 5. The position and speed y detected by the detector 6 are fed back to the digital servo circuit 3. In Fig. 3, the servo amplifier 4 and the servomotor 5 are shown in a control system for only one shaft. Fundamental constitution of the control system for the servomotor shown in Fig. 3 is known as a control system for a CNC machine tool or a robot using a conventional digital servo circuit and therefore will not be explained in detail.

Fig. 4 is a flowchart showing an inertia estimation processing, executed by the processor of the digital servo circuit 3 in accordance with an embodiment of the present invention. The processor executes the processing shown in Fig. 4 in each predetermined cycle (usual speed loop processing cycle).

A program for inertia estimation, including a predetermined move command, is executed by the CNC 1. When an inertia estimation processing command is inputted to the CNC 1, the CNC 1 executes the above program and outputs a move command to the processor in the digital servo circuit 3 through the common memory 2 in every distribution cycle. Upon reception of this move command, the processor of the digital servo circuit 3 executes the position loop processing in the conventional manner to obtain a speed command, and the processing shown in Fig. 4.

First, in step S1, variation u' of the torque command u is obtained by subtracting the torque command u(i-2) which is the torque command of two processing periods before the present processing cycle i, from the torque command u(i-2) which is the torque command of one processing period before, both the torque commands u(i-2) and u(i-1) being stored in the register.

Subsequently, in step S2, the actual speed y(i-2) detected two processing periods before is subtracted from the doubled value of the actual speed y(i-1) of the servomotor, which is detected one processing period before and stored in the register. To this result, the value obtained by multiplying the estimated ratio b*(i-1), which is determined in preceding processing period and stored in the register, by the variation u' of the torque command obtained in step S1 is added to determined the estimated speed y*, i.e., the estimated speed y* is determined by executing the operation of the above equation (5).

In step S3, both the speed command obtained by the position loop processing and the actual speed y(i) of the servomotor 5 detected by the position and speed detector 6 are inputted. In step S4, on the basis of these speed command and the actual speed y(i), the speed loop processing (PI control etc.) is executed in the conventional manner to obtain the torque command u(i). The obtained torque command u(i) is supplied to the current loop to drive and control the servomotor.

Subsequently, in step S5, the estimated speed error e(i) is calculated by subtracting the estimated speed y* obtained in step S2 from the actual speed y(i) of the servomotor read in step S3. Then, the estimated ratio b*(i) is obtained in step S6 by executing the operation of the equation (6) based on the estimated speed error e(i) obtained in the step S5, the estimated ratio b*(i-1) obtained one processing period before and stored in the register, and the variation u' of the torque command u, which is obtained in step S1. Thus obtained estimated ratio b*(i) is stored in the register and outputted through the common memory 2 to the CNC 1. Upon receiving a display command, the CNC 1 displays this estimated ratio b* on a display unit.

Above steps S1 to S6 are executed in every speed loop processing cycle to obtain and renew the estimated ratio b* successively, thereby converging the estimated ratio b* on a certain constant value. This converged value is the ratio of (torque constant/inertia) to be obtained.

Once the estimated ratio b* is converged, an inertia estimation processing ending command is inputted, whereby the estimated ratio b* is stored in the memory and is utilized as a coefficient in the processing of an observer described later. Furthermore, this estimated ratio b* is used for determining a feedback gain in the speed loop.

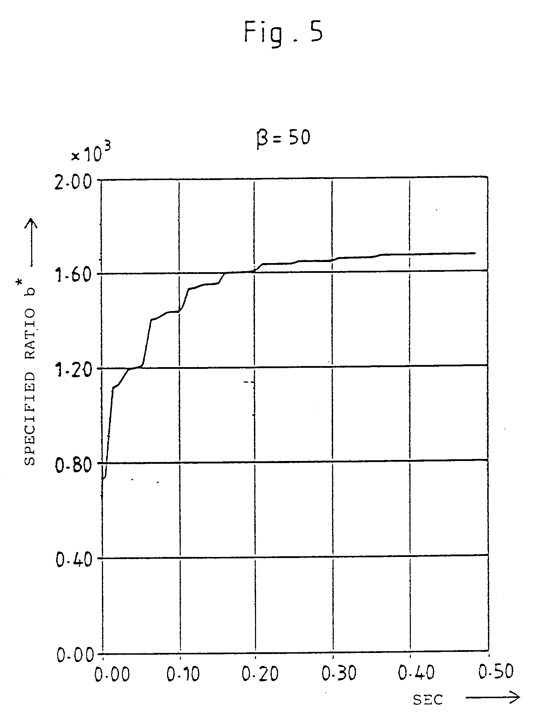

Fig. 5 is a graph showing transition of the estimated ratio b* determined as described above, where the acceleration and deceleration are repeated at intervals of 100 msec in a control system carrying out the position control. Fig. 5 shows that the estimated ratio b* converges on a constant value within a short time.

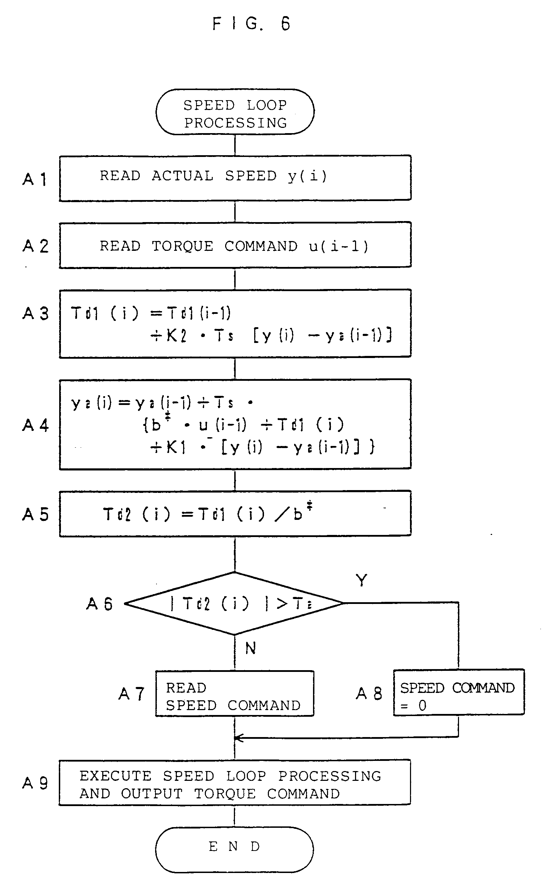

Fig. 6 is a flowchart of the processes which are executed by the processor in the digital servo circuit 3 in each position and speed loop processing period to estimate the disturbance torque with the observer and detect abnormal load using the estimated ratio b*.

The parameters K1 and K2 constituting the observer and the threshold value Ta for detecting abnormal load are preset in the digital servo circuit 3.

First, the actual speed y(i) of the servomotor, fed from the position and speed detector 6, is read in step A1, and the torque command u(i-1) obtained in the speed loop processing is read in step A2. Next, in step A3, the estimated speed ya(i-1) estimated in the preceding processing period and stored in the register is subtracted from the actual speed y(i) read in step A1; the obtained value is multiplied by parameter K2 which is the integration gain of the observer, and speed loop period Ts; to this result the integration value Td1(i-1) to the preceding processing period, is added to obtain the integrated value Td1(i) of the observer in the present processing period. That is, the processing corresponding to the term 53 of Fig. 2 is executed to obtain the integration value Td1.

Next, in step A4, the value obtained by multiplying the torque command value u(i-1) of the preceding processing period stored in the register by the aforesaid estimated ratio b* of (torque constant/inertia), the integration value Td1(i) obtained in step A3, and the value obtained by multiplying the parameter K1 as a proportional gain by the value obtained by subtracting the estimated speed ya(i-1) obtained in the preceding processing period and stored in the register from the actual speed of the present processing period read in step A1 are added; this sum is multiplied by the speed loop and to this result the estimated speed ya(i-1) determined in the preceding processing period is added to determine the estimated speed ya(i) of the present processing period. That is, the processing for obtaining the estimated speed ya is executed according to the term 54 in Fig. 2.

In step A5, the integration value Td1(i) obtained in step A3 is multiplied by a reciprocal of the estimated ratio b* of (torque constant/inertia) to obtain the estimated value Td2(i) of the disturbance torque. In step A6, it is determined whether an absolute value of Td2(i) obtained in the above step A5 is larger than the threshold value Ta. If the absolute value of Td2(i) is larger than the threshold value Ta, the processor proceeds to step A8 and the speed command is set to "0" based on a judgement that the motor is subjected to an abnormal load. If the absolute value of Td2(i) is not larger than the threshold value Ta, the processor proceeds to step A7 and read the speed command based on a judgement that there is no abnormal load. Thereafter, in step A9, the speed loop processing is executed in the conventional manner to obtain the torque command on the basis of the speed command in the steps A7 and A8. The torque command obtained is supplied to the current loop.

The processor in the digital servo circuit 3 executes the above processing in each speed loop processing period. When the absolute value of the estimated disturbance torque Td2(i) exceeds the threshold value Ta in step A6, the speed command is reduced to "0" and the speed loop processing is executed based on the speed command of "0". Accordingly, the torque command obtained by the speed loop processing becomes a torque command for reversing the rotational direction of the motor, thereby causing the motor to be stopped quickly.

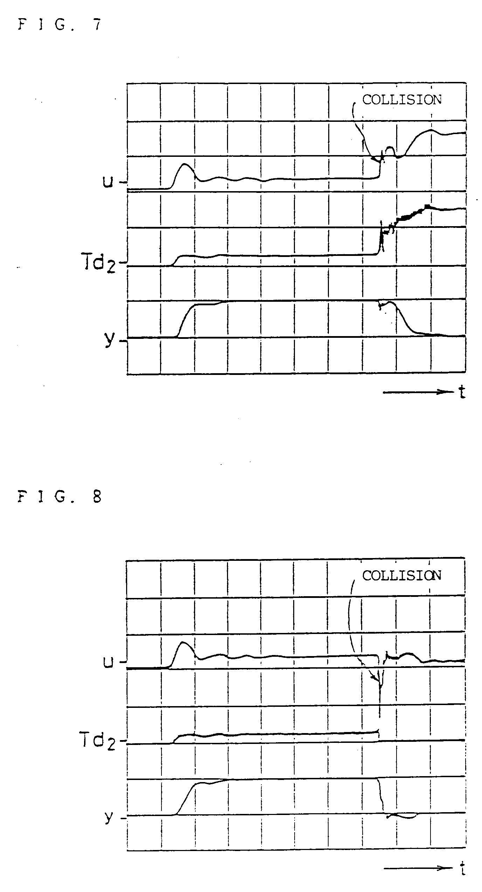

Figs. 7 and 8 are graphs showing measured values of the torque command u, estimated disturbance torque Td2 and actual speed y in the case where the abnormal load detecting processing according to the present embodiment is applied and in the case where the same is not applied, respectively.

In Fig. 7 showing the case where no abnormal load detecting processing is carried out, the torque command u remains as an increased value after a collision has occurred, and hence the estimated disturbance torque Td2 also remains as an increased value. Furthermore, the actual speed y is reduced to "0" in a considerable time after the collision.

On the contrary, in Fig. 8 showing the case where the abnormal load detecting processing of the present invention is carried out, the torque command u turns negative when the collision occurs (i.e., a torque command of reverse direction is generated). This is caused by the processing that the speed command is reduced to "0" because the estimated disturbance torque Td2 has exceeded the threshold value due to the collision. Consequently, the actual speed y is also quickly reduced to "0" and the generated torque is reduced to "0", as is seen from the value of the estimated disturbance torque. As apparent from Fig. 8, when the abnormal load detecting processing in accordance with the present invention is executed, abnormal load condition, due to the collision between the machine connected to the motor and other objects or malfunction of the feed shaft driven by the motor, can be detected immediately. Accordingly, no large force is applied on the machine and the objects with which the machine collides. Thus, these devices can be prevented from being damaged.

Although the torque command increases when the motor is to be accelerated or decelerated, only the disturbance torque can be estimated without being affected by the increase of the torque command, because the ratio of torque constant to inertia is accurately estimated. Thus, the threshold value Ts for detecting the abnormal load can be reduced to a smaller value, so that the abnormal load can be detected with high sensitivity.

Although the estimated ratio b* is obtained beforehand, in the above-described embodiment, the estimated ratio b* may be obtained in each speed loop processing so that the speed loop gain is automatically corrected or the above coefficients of the observer is automatically corrected on the basis of thus obtained estimated ratio b*.

Furthermore, although the above embodiment is described on the system using a servomotor as a driving source, the present invention can be applied to any other system incorporating the motor other than the servomotor as a driving source in the same manner as described.

As described above, according to the present invention, the ratio of torque constant to inertia can be obtained accurately without requiring special means. Therefore, the speed loop gain and the speed loop feedforward gain, which are dependent on this ratio, can be set to appropriate values. Furthermore, the estimated ratio of torque constant to inertia is used to accurately estimate an acceleration, etc. in the observer for estimating disturbance. Therefore, only the disturbance torque, excluding the torque for acceleration or deceleration, is accurately estimated. Thus, the threshold value for the abnormal load detection can be set to a smaller value when detecting the abnormal load by the observer. As a result, the abnormal load due to the malfunction of the feed shaft of a motor-driven machine and collision between the machine and other objects, can be detected with high sensitivity.

**Claims**

1. A method of estimating inertia of a motor and a machine connected to the motor in a motor drive and control system for executing feedback-control of the motor speed, comprising steps of:

   (a) obtaining an estimated motor speed $y^*$ based on a variation $u'$ between a torque command $u(i-1)$ of one processing period before and a torque command $u(i-2)$ of two processing periods before, an actual motor speed $y(i-1)$ of one processing period before, an actual motor speed $y(i-2)$ of two processing periods before, and an estimated ratio $b^*(i-1)$ between torque constant and inertia of the motor obtained one processing period before;

   (b) obtaining an estimated speed error $e$ which is a difference between an actual motor speed $y(i)$ of the present processing period and said estimated motor speed $y^*$;

   (c) correcting and updating said estimated ratio $b^*(i)$ based on said estimated speed error $e$ in such a manner that a variation of the estimated ratio $b^*(i)$ is small when the variation $u'$ of said torque command is small, is substantially proportional to said variation $u'$ of said torque command until said variation $u'$ exceeds a predetermined value, and is saturated to become a certain value when said variation $u'$ of said torque command exceeds the predetermined value; and

   (d) determining said ratio between said constant value and inertia to be a value to which said estimated ratio $b^*(i)$ converges.

2. A method of estimating inertia according to claim 1, said step (c) including a step of correcting and updating the estimated ratio $b^*(i)$ between the torque constant and the inertia of the present processing period based on the following equation using a preset parameter $\beta$.

$$b^*(i) = b^*(i-1) + \beta \cdot u' \cdot e/(1 + \beta u'^2)$$

3. A method of estimating disturbance torque in a motor drive and control system for executing feedback-control of the motor speed, comprising steps of:

   (a) obtaining an estimated motor speed $y^*$ based on a variation $u'$ between a torque command $u(i-1)$ of one processing period before and a torque command $u(i-2)$ of two processing periods before, an actual motor speed $y(i-1)$ of one processing period before, an actual motor speed $y(i-2)$ of two processing periods before, and an estimated ratio $b^*(i-1)$ between torque constant and inertia of the motor obtained one processing period before;

   (b) obtaining an estimated speed error $e$, which is a difference between an actual motor speed $y(i)$ of the present processing period and said estimated motor speed $y^*$;

   (c) correcting and updating said estimated ratio $b^*(i)$ based on said estimated speed error $e$ in such a manner that a variation of the estimated ratio $b^*(i)$ is small when the variation $u'$ of said torque command is small, is substantially proportional to said variation $u'$ of said torque command until said variation $u'$ exceeds a predetermined value, and is saturated to become a certain value when said variation $u'$ of said torque command exceeds the predetermined value;

   (d) determining said ratio between said constant value and inertia to be a value to which said estimated ratio $b^*(i)$ converges.

   (e) providing an observer including a coefficient for converting a torque command into an estimated acceleration using the motor speed and the disturbance torque as state variables, respectively; and

   (f) setting the coefficient for converting the torque command to the estimated acceleration in said observer to said ratio between torque constant and inertia obtained in said step (d), and estimating the disturbance torque by said observer.

4. A method of estimating disturbance torque according to claim 3, said step (c) including a step of correcting and updating the estimated ratio $b^*(i)$ between the torque constant and the inertia of the present processing period based on the following equation using a preset parameter $\beta$.

$$b^*(i) = b^*(i-1) + \beta \cdot u' \cdot e/(1 + \beta u'^2)$$

5. A method of estimating disturbance torque according to claim 3, said step (f) comprising the steps of:

   (f1) multiplying the value obtained by subtracting the estimated speed $ya(i-1)$ estimated in the preceding processing period from the actual speed $y(i)$ in the present processing period by a parameter $K2$ and a speed loop cycle $Ts$, and adding thus obtained value to an integration value $Td1(i-1)$ up to the preceding processing period to obtain an integration value $Td1(i)$ in the present processing period;

(f2) adding the value obtained by multiplying the torque command u(i-1) in the preceding processing period by said ratio between the torque constant and the inertia and said integration value Td1(i) to the value obtained by multiplying the parameter K1 by the value subtracting the estimated speed ya-(i-1) obtained in the preceding processing period from the actual speed y(i) in the present processing period; multiplying the sum by the speed loop period Ts; and adding to this result the estimated speed ya(i-1) obtained in the preceding processing period to determine ya(i) in the present processing period.

(f3) multiplying the integration value Td1(i) by a reciprocal of the estimated ratio b* between the torque constant and the inertia to obtain the estimated value Td2(i) of the disturbance torque.

6.  A method of detecting abnormal load in a motor drive and controls of system for executing feedback control of the motor speed, comprising steps of:

(a) obtaining an estimated motor speed y* based on a variation u' between a torque command u(i-1) of one processing period before and a torque command u(i-2) of two processing periods before, an actual motor speed y(i-1) of one processing period before, an actual motor speed y(i-2) of two processing periods before, and an estimated ratio b*(i-1) between torque constant and inertia of the motor obtained one processing period before;

(b) obtaining an estimated speed error e, which is a difference between an actual motor speed y(i) of the present processing period and said estimated motor speed y*;

(c) correcting and updating said estimated ratio b*(i) based on said estimated speed error e in such a manner that a variation of the estimated ratio b*(i) is small when the variation u' of said torque command is small, is substantially proportional to said variation u' of said torque command until said variation u' exceeds a predetermined value, and is saturated to become a certain value when said variation u' of said torque command exceeds the predetermined value;

(d) determining said ratio between said constant value and inertia to be a value to which said estimated ratio b*(i) converges.

(e) providing an observer including a coefficient for converting a torque command into an estimated acceleration using the motor speed and the disturbance torque as state variables, respectively; and

(f) setting the coefficient for converting the torque command to the estimated acceleration in said observer to said ratio between torque constant and inertia obtained in said step (d), and estimating the disturbance torque by said observer.

(g) determining whether or not the disturbance torque estimated in said step (f) is larger than a predetermined value; and

(h) reducing a speed command to 0 so as to stop the motor when the estimated disturbance torque is determined to be larger than the predetermined value in said step (g).

F I G. 1

F I G. 3

F I G. 2

F I G. 4

$$u^{-} = u(i-1) - u(i-2)$$

S 1

$$y^{\frac{1}{2}} = 2 \cdot y(i-1) - y(i-2)$$
$$+ b^{\frac{1}{2}}(i-1) \cdot u^{-}$$

S 2

S 3  INPUT SPEED COMMAND AND ACTUAL SPEED y(i)

S 4  EXECUTE SPEED LOOP PROCESSING TO OBTAIN AND OUTPUT TORQUE COMMAND u(i)

CALCULATION OF ESTIMATED SPEED ERROR
$$e(i) = y(i) - y^{\frac{1}{2}}$$

S 5

CALCULATE AND OUTPUT ESTIMATED RATIO
$$b^{\frac{1}{2}}(i) = b^{\frac{1}{2}}(i-1)$$
$$+ \beta \cdot u^{-} \cdot e(i) / (1 + \beta \cdot u^{-2})$$

S 6

E N D

13

# Fig . 5

F I G. 6

$$\text{SPEED LOOP} \atop \text{PROCESSING}$$

A1 — READ ACTUAL SPEED $y(i)$

A2 — READ TORQUE COMMAND $u(i-1)$

A3 — $Td1(i) = Td1(i-1)$
$\qquad + K2 \cdot Ts \; [y(i) - y_a(i-1)]$

A4 — $y_a(i) = y_a(i-1) + Ts \cdot$
$\qquad \{b^{\neq} \cdot u(i-1) + Td1(i)$
$\qquad + K1 \cdot [y(i) - y_a(i-1)]\}$

A5 — $Td2(i) = Td1(i) / b^{\neq}$

A6 — $|Td2(i)| > T_a$

Y

N

A7 — READ SPEED COMMAND

A8 — SPEED COMMAND = 0

A9 — EXECUTE SPEED LOOP PROCESSING AND OUTPUT TORQUE COMMAND

E N D

15

F I G. 7

F I G. 8

International application No.

PCT/JP93/00966

**A. CLASSIFICATION OF SUBJECT MATTER**

Int. Cl$^5$ H02P5/00

According to International Patent Classification (IPC) or to both national classification and IPC

**B. FIELDS SEARCHED**

Minimum documentation searched (classification system followed by classification symbols)

Int. Cl$^5$ H02P5/00

Documentation searched other than minimum documentation to the extent that such documents are included in the fields searched

| | |
|---|---|
| Jitsuyo Shinan Koho | 1970 - 1992 |
| Kokai Jitsuyo Shinan Koho | 1971 - 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, A, 2-7887 (Fuji Electric Co., Ltd.), January 11, 1990 (11. 01. 90), (Family: none) | 1-6 |
| Y | JP, A, 2-30487 (Matsushita Electric Ind. Co., Ltd.), January 31, 1990 (31. 01. 90), (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| October 5, 1993 (05. 10. 93) | October 26, 1993 (26. 10. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)